# EUROPÄISCHE PATENTSCHRIFT

(11) **EP 0 900 720 B1**
(45) Veröffentlichungstag und Bekanntmachung des Hinweises auf die Patenterteilung: **26.03.2003**
(21) Anmeldenummer: 98810865.0
(22) Anmeldetag: 01.09.1998
(51) Int. Cl.: B62D 61/12

(54) **An einem pneubereiften Einachs- oder Tandemachsanhänger für Strassenfahrzeuge anbaubare Vorrichtung zur Verbesserung der Spurtreue**
Stability improving device for mounting on a pneumatic-tyred, single- or tandem-axle trailer for road vehicles
Dispositif pour l'amélioration de la stabilité, pour être monté sur une remorque équipée de pneumatiques et d'un essieu simple ou d'essieux en tandem pour véhicules automobiles

(30) Priorität: 02.09.1997 CH 205397
(43) Veröffentlichungstag der Anmeldung: 10.03.1999
(73) Patentinhaber: Kläsi, Jakob, 8588 Zihlschlacht (CH)
(72) Erfinder: Kläsi, Jakob, 8588 Zihlschlacht (CH)
(74) Vertreter: Gachnang, Hans Rudolf

(56) Entgegenhaltungen:
- GB-A- 2 250 964
- SE-B- 460 776
- US-A- 3 664 679
- US-A- 3 770 071
- US-A- 4 623 165

## Beschreibung

Gegenstand der Erfindung ist eine an einem pneubereiften Einachs- oder Tandemachsanhänger für Strassenfahrzeuge anbaubare Vorrichtung zur Verbesserung der Spurtreue.

Von Personenwagen oder den heute beliebten Geländewagen gezogene Anhänger weisen üblicherweise Tandemachsen, d.h. zwei sehr nahe beieinander liegende Achsen oder eine Einzelachse auf. Die Achs-Systeme sind üblicherweise in der Mitte des Aufbaus montiert. Solche pneubereifte Anhänger lassen sich sehr leicht manövrieren und weisen zudem angenehme Nachlaufeigenschaften am Zugfahrzeug auf. Diese positiven Manövrier- und Fahreigenschaften erweisen sich allerdings als nachteilig, wenn beim Überholen anderer Fahrzeuge oder bei starkem, plötzlich auftretendem Seitenwind, unebenen Strassen, Spurrinnen etc. entsprechende Querkräfte auf den Anhänger wirken.

Insbesondere bei Wohnwagen mit einer sehr grossen Seitenfläche können solche seitlich wirkenden Kräfte verheerend sein und führen sogar zu Unfällen.

Es wurden deshalb schon verschiedene Massnahmen vorgeschlagen, um Anhänger auch bei Seitenwind zu stabilisieren, d.h. deren Geradeauslauf zu verbessern. Bekannt sind Bremsen, welche die Drehbewegung zwischen der Deichsel und dem Zugfahrzeug dämpfen. Solche Vorrichtungen können aber bereits aus physikalischen Gründen nicht sehr wirksam sein, wenn sie direkt auf die Kugel auf dem Haken am Zugfahrzeug einwirken. Es sind aber auch Stabilisatoren bekannt, welche zwischen der Hinterkante des Zugfahrzeuges und dem Anhänger eingesetzt sind und die Auslenkbewegungen des Anhängers dämpfen sollen. Diese Systeme haben den Nachteil, dass bei zu starker Dämpfung des Knickverhaltens (Auslenken) zwischen Anhänger und Zugfahrzeug der Geradeauslauf des Zugfahrzeuges ungünstig beeinflusst wird.

Für Fahrten auf Eis und Schnee ist weiter eine Fahrtrichtungssicherung aus der deutschen Offenlegungsschrift 2602721 bekannt. Bei dieser Fahrtrichtungssicherung für Personenwagen wird vorgeschlagen, direkt hinter den Hinterrädern in der Wagenmitte einen mit Bremselementen versehenen Sporn auf die Fahrbahn abzusenken und anzupressen. Das Absenken des Sporns soll jeweils just in dem Moment erfolgen, wenn das Fahrzeug zu schleudern beginnt. Durch die in Fahrtrichtung wirkende Bremse soll das seitliche Schlingern vermieden werden. Die Wirkung eines solchen Bremsdorns ist fraglich, und er lässt sich nur gerade beim Schlingern einsetzen und muss selbstverständlich sofort wieder angehoben werden, um zu verhindern, dass nicht die gelenkten Räder am vorderen Fahrzeugende auf glitschiger Strasse ihre Wirksamkeit verlieren. Ein Einsatz auf trockener Strasse ist nicht möglich.

Aus der US4623165 ist eine Vorrichtung zum Stabilisieren von motorbetriebenen Fahrzeugen bekannt, die von einem Achsenpaar mit je einem oder zwei Reifen an jedem Ende getragen werden. Die hintere dieser Achsen ist bei solchen Fahrzeugen häufig in Bezug auf das Fahrzeugende nach vorne versetzt angeordnet. Dadurch kann - auf Kosten der Stabilität des Fahrzeuges - der Wenderadius verkleinert werden. Durch einen oder mehrere zusätzliche Räder oder Reifen, die nahe beim Fahrzeugende auf die Strassenoberfläche absenkbar sind, kann die Stabilität des Fahrzeugs verbessert werden. Diese Reifen erhöhen den Reibungskontakt mit der Strassenoberfläche und stützen das instabile Fahrzeugende ab. Dadurch wird die Tragkraft des Fahrzeugrahmens erhöht. Die Reifen zum Stützen des Fahrzeugs werden mit grosser Kraft gegen die Strassenoberfläche gedrückt.

Aus der SE460776 ist ein Anhänger mit einer Stabilisierungsvorrichtung nach dem Oberbegriff des Anspruchs 1 bekannt, bei der vorne an einem am Fahrzeugboden befestigten Träger am Ende eines Hebels ein Hilfsrad angelenkt ist. Ein Stossdämpfer ist ungefähr in der Mitte des Hebels und hinten am Träger angelenkt und drückt dadurch das Hilfsrad gegen den Boden. Dabei ist der Hebel unter einem grossen Anstellwinkel zum Boden bzw. zum Fahrzeugboden schräg nach hinten geneigt. Das Hilfsrad liegt in Fahrtrichtung zwischen den Anlenkstellen des Hebels und des Stossdämpfers am Träger.

Aufgabe der vorliegenden Erfindung ist die Schaffung einer Vorrichtung, welche permanent das seitliche Ausscheren von ein- und tandemachsbestückten Anhängern vermeidet und gleichzeitig den Fahrkomfort und die Fahrsicherheit des gesamten Fahrzeuggespanns positiv beeinflusst.

Gelöst wird diese Aufgabe durch eine an einem pneubereiften Einachs- oder Tandemachsanhänger für Strassenfahrzeuge anbaubare Vorrichtung zur Verbesserung der Spurtreue gemäss den Merkmalen des Patentanspruchs 1. Vorteilhafte Ausgestaltungen der Erfindung sind in den abhängigen Ansprüchen definiert.

Ein oder vorzugsweise zwei in grösstmöglichem Abstand zur Achse des Anhängers unter dem Heck angeordnete ungelenkte Nachlaufräder verhindern das seitliche Wegschieben des überhängenden Teils des Anhängers und damit Querkräfte auf das Heck des Zugfahrzeugs in entgegengesetzter Richtung. Auftretende Querkräfte werden somit dort, wo sie entstehen, abgefangen. Die Nachlaufräder beeinflussen die Lenkfähigkeit des Anhängers beim Fahren auf Autobahnen und Autostrassen nicht; in kurvenreichem Gelände wie Passstrassen oder im Innerortsverkehr können die Nachlaufräder, um unnötigen Pneuverschleiss zu verhindern, abgehoben und ausser Kontakt mit der Strasse gebracht werden. Die Nachlaufräder können über einen Hebe-/Senkmechanismus aus einer Ruheposition in eine Fahrposition gebracht werden. Die Hebe- und Senkvorrichtung ist mit einem Feder- und Dämpfungsbereich bestückt, der eine gleichmässige geringe Auflagekraft auf die Strassenoberfläche bewirkt. Die Nachlaufräder übernehmen aktiv keine Last des Anhängers, sie beeinflussen daher auch nur unwesentlich die Deichsellast am Zugfahrzeug, welche beim Beladen des Anhängers angepasst wird. Die Nachlaufräder beeinträchtigen auch nicht das Manövrieren mit dem Anhänger, da sie jederzeit hochgestellt werden können.

Die Vorrichtung entfaltet seine Wirkung bei leichten Anhängern (bis 3500 kg) wie auch bei schweren Anhängern dieser Bauart (über 3500 kg). Die Vorrichtung eliminiert auch die bei schlechten Strassen auftretenden Vertikalkräfte (Auf- und Abbewegungen) massiv.

Anhand eines illustrierten Ausführungsbeispiels wird die Erfindung näher erläutert. Es zeigen:

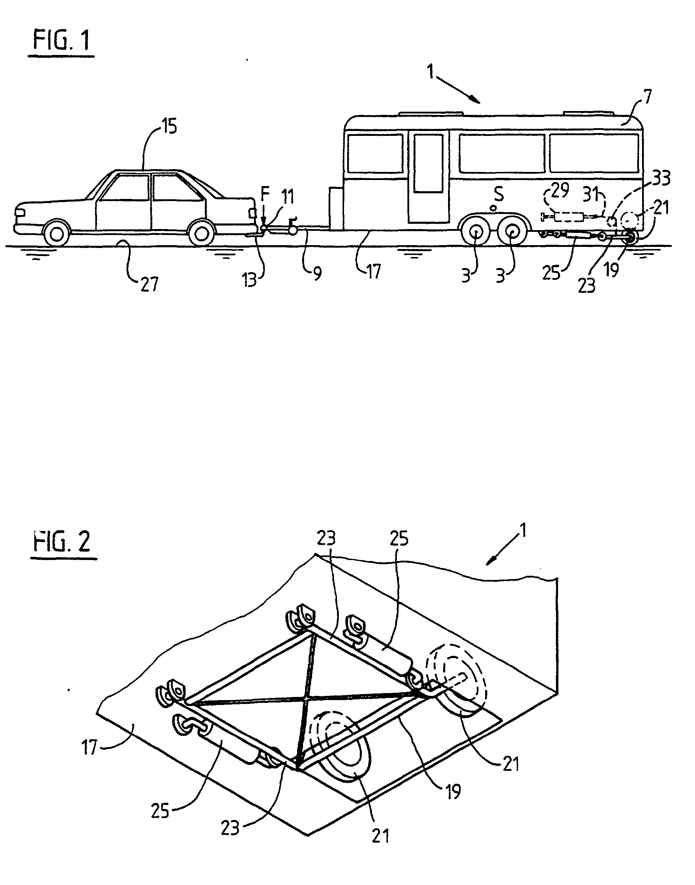

- Figur 1: eine Seitenansicht eines Wohnwagens mit Tandemachse und Nachlaufrädern,
- Figur 2: eine perspektivische Untersicht des Wohnwagens im Bereich bei angehobenen Nachlaufrädern,

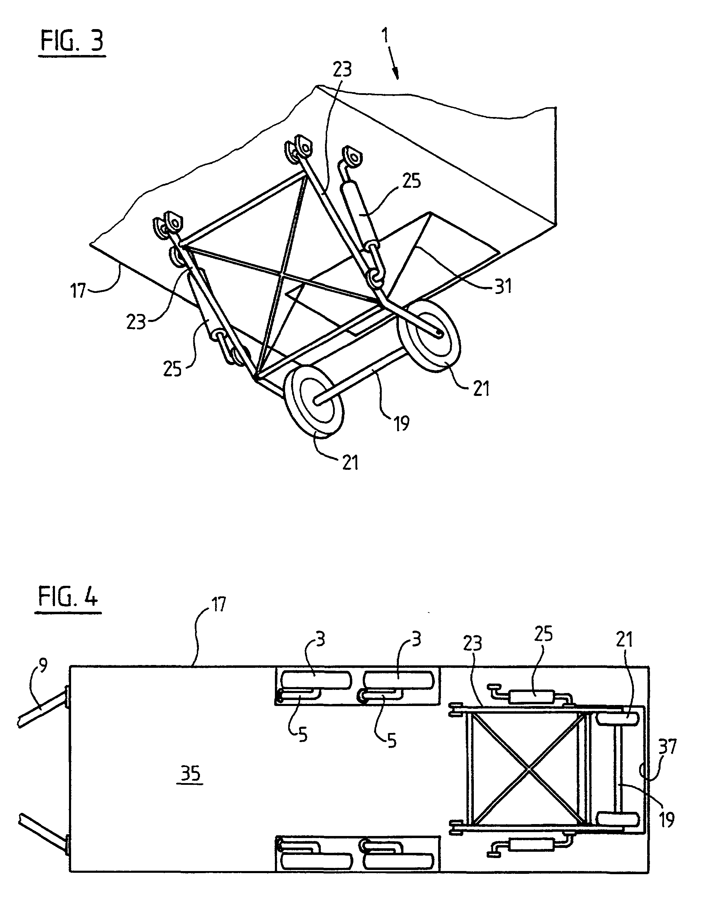

- Figur 3: eine perspektivische Untersicht des Wohnwagens im Bereich der abgesenkten Nachlaufräder und
- Figur 4: eine Ansicht des Wohnwagenbodens von unten.

Ein Anhägerfahrzeug, im Beispiel ein Wohnwagen 1 mit zwei Tandemachsen 3, die an Schwingen 5 federnd aufgehängt sind, umfasst weiter einen Aufbau 7, eine Deichsel 9 und eine Anhängevorrichtung 11 für eine Verbindung mit der Anhängekupplung 13 eines Zugfahrzeugs 15. Die beiden Tandemachsen 3 sind an einem Chassis 17 des Wohnwagens 1 befestigt und liegen im wesentlichen unterhalb des Schwerpunktes S des Wohnanhängers 1.

In Fahrtrichtung hinter den Tandemachsen 3 ist eine Nachlaufachse 19 mit zwei pneubereiften Rädern 21 schwenkbar am Chassis 17 befestigt. Die Nachlaufachse 19 ist mit zwei Schwingen 23 verbunden, welche gelenkig am Chassis 17 befestigt sind. Die Schwingen 23 sind vorzugsweise als Gitterkonstruktion ausgebildet. Zwischen dem Chassis 17 und den Schwingen 23 ist ein Feder- /Dämpfungselement 25 eingesetzt, welches die beiden Nachlaufräder 21 mit einer vorgebbaren Anpresskraft auf die Oberfläche 27 der Strasse presst. Die Anpresskraft liegt vorzugsweise im Bereich von ca. 60 bis 100 kp für leichte Anhänger. Eine Hebevorrichtung 29, z.B. eine Seilwinde oder ein Elektro- oder Pneumatikmotor ist über einen Seilzug 31 und eine Umlenkrolle 33 mit der Schwinge 23 verbunden. Die Betätigung der Hebevorrichtung 29 kann vorzugsweise aus dem Zugfahrzeug 15 erfolgen.

Die Schwingen 23, welche die Nachlaufräder 21 tragen, sind vorzugsweise aus Aluminium hergestellt, so dass die Masse der gesamten Vorrichtung sehr gering und für das Gesamtgewicht des Anhängers 1 kaum ins Gewicht fällt.

Im Boden 35 des Wohnwagens 1 kann eine Öffnung 37 eingelassen sein, welche das Hochschwenken der Schwingen 23 und das Einführen der Nachlaufräder 21 in eine Ruhestellung erlaubt. Üblicherweise befindet sich die Öffnung 37 unterhalb von im Wohnwagen 1 vorhandenen Sitzbänken, so dass innerhalb des Wohnraums durch die Räder 21 kein Raum verlorengeht. Beim Einbau in einem Plattformanhänger können auch zusätzliche Radkasten notwendig sein.

In einer weiteren, nicht dargestellten Ausführungsform der Erfindung können das oder die Nachlaufräder 21 an einem Federbein vertikal geführt und von der Ruhe- in die Fahrstellung führbar gelagert sein.

Im Fahrbetrieb sind die beiden Nachlaufräder 21 auf die Fahrbahn 27 abgesenkt und werden auf dieser mit der vorgegebenen Kraft aufgepresst. Die Kraft ist derart bemessen, dass sie keinen wesentlichen Einfluss auf die vier Haupträder auf den beiden Tandemachsen bzw. die beiden Haupträder bei einer Einzelachse ausübt und auch die Federungseigenschaften des Fahrzeugs nicht verändert. Zudem sind sie derart eingestellt, dass die vom Hersteller vorgegebene Deichsellast F auf das Fahrzeug 15 nicht überschritten wird. Das Feder- und Dämpfungselement 25 bewirkt eine stets gleichbleibende gedämpfte Abstützung der Nachlaufräder 21.

Bei Seitenwind genügt die Rollreibung der Nachlaufräder 21, um einen seitlichen Versatz des Anhängers 1 zu verhindern.

Beim Befahren von kurvenreichen Strassen, wie Alpenpässen, oder in Städten, in denen ohnehin mit sehr geringer Geschwindigkeit gefahren wird, können die Nachlaufräder 21 mit der Vorrichtung 29 hochgezogen werden.

## Patentansprüche

1. An einem pneubereiften, eine oder zwei nahe beieinanderliegende, unterhalb des Schwerpunktes (S) angeordnete Achsen (3), eine Deichsel (9) und eine Anhängevorrichtung (11) für die Verbindung mit einer Anhängekupplung (13) eines Zugfahrzeugs (15) umfassenden Einachs- oder Tandemachsanhänger für Strassenfahrzeuge anbaubare Vorrichtung zur Verbesserung der Spurtreue, umfassend mindestens ein pneubereiftes, nicht lenkbares Nachlaufrad (21), das am Ende einer am Fahrzeugboden (35) gelenkig befestigten Schwinge (23) in Fahrtrichtung hinter der oder den Anhängerachsen (3) befestigt und durch eine Feder (25) auf die Strassenoberfläche aufpressbar ist, **dadurch gekennzeichnet, dass** die Feder (25) an der Schwinge (23) und in Fahrtrichtung vor dem Nachlaufrad (21) am Fahrzeugboden (35) gelenkig eingesetzt ist, und dass das Nachlaufrad (21) durch die Feder (25) mit gleichmässiger Auflagekraft derart auf die Strassenoberfläche (27) aufpressbar ist, dass eine am Zugfahrzeug (15) vorgegebene Deichsellast (F) nicht überschreitbar ist.

2. Vorrichtung nach Anspruch 1, **dadurch gekennzeichnet, dass** zwei Schwingen (23) als Gitter ausgestaltet sind und eine Achse (19) mit zwei Nachlaufrädern (21) tragen.

3. Vorrichtung nach einem der Ansprüche 1 oder 2, **dadurch gekennzeichnet, dass** das mindestens eine Nachlaufrad (21) mit einer Hebevorrichtung aus einer Fahr- und einer Ruhestellung schwenkbar ist.

4. Einachs- oder Tandemanhänger mit einer Vorrichtung nach einem der Ansprüche 1 bis 3.

5. Einachs- oder Tandemanhänger nach Anspruch 4, **dadurch gekennzeichnet, dass** die Feder (25) am Fahrzeugboden (35) in Fahrtrichtung hinter der Befestigungsstelle der Schwinge (23) und vor dem Nachlaufrad (21) am Fahrzeugboden (35) gelenkig befestigt ist.

6. Einachs- oder Tandemanhänger nach einem der Ansprüche 4 oder 5, **dadurch gekennzeichnet, dass** im Fahrzeugboden (35) eine Öffnung (37) vorgesehen ist, welche beim Hochschwenken der Schwingen (23) das Einführen des oder der Nachlaufräder (21) erlaubt.

## Claims

1. Apparatus, which is attachable to a single-axle or tandem-axle trailer for road vehicles, which trailer is fitted with pneumatic tyres and includes one or two axles (3), which lie close together and are disposed below the centre of gravity (S), a towbar (9) and a trailer device (11) for connection to an attachment coupling (13) of a towing vehicle (15), said apparatus serving to improve the track-keeping and including at least one non-steerable trailing wheel (21), which is fitted with a pneumatic tyre and is mounted on the end of a pivoting arm (23), pivotally mounted on the vehicle base (35), behind the trailer axle or axles (3), when viewed with respect to the direction of travel, and said trailing wheel being urgeable onto the road surface by means of a spring (25), **characterised in that** the spring (25) is pivotally inserted on the pivoting arm (23) and, when viewed with respect to the direction of travel, before the trailing wheel (21) on the vehicle base (35), and **in that** the trailing wheel (21) is urgeable onto the road surface (27) by means of the spring (25) with a uniform force of application in such a manner that a towbar load (F), which is prescribed in respect of the towing vehicle (15), cannot be exceeded.

2. Apparatus according to claim 1, **characterised in that** two pivoting arms (23) are in the form of gratings and carry an axle (19) having two trailing wheels (21).

3. Apparatus according to one of claims 1 or 2, **characterised in that** the at least one trailing wheel (21) is pivotable from a travel position and an inoperative position by means of a lifting device.

4. Single-axle or tandem-axle trailer, having an apparatus according to one of claims 1 to 3.

5. Single-axle or tandem-axle trailer according to claim 4, **characterised in that** the spring (25) on the vehicle base (35) is pivotally mounted on the vehicle base (35) behind the mounting point of the pivoting arm (23) and before the trailing wheel (21) when viewed with respect to the direction of travel.

6. Single-axle or tandem-axle trailer according to one of claims 4 or 5, **characterised in that** there is provided in the vehicle base (35) an opening (37) which permits the trailing wheel or wheels (21) to be introduced during the upward pivotal movement of the pivoting arms (23).

## Revendications

1. Dispositif pour l'amélioration de la stabilité pour des véhicules routiers, pouvant être monté sur une remorque à essieu tandem ou à essieu simple équipée de pneumatiques, comprenant un ou deux essieux (3) situés l'un près de l'autre et placés en dessous du centre de gravité (S), un timon (9) et un dispositif de remorque (11) pour la liaison avec un attelage de remorque (13) d'un véhicule de traction (15), comprenant au moins une roue de chasse (21) non dirigeable, équipée de pneumatique, fixée dans le sens de la marche derrière l'essieu ou les essieux (3) au bout d'une bielle elle-même fixée de façon articulée au plancher du véhicule (35) et qui peut être appliquée par pression par un ressort (25) sur la surface de la route, **caractérisé en ce que** le ressort (25) est placé de façon articulée sur la bielle (23) et vu dans le sens de la marche devant la roue de chasse (21) au plancher du véhicule (35) et **en ce que** la roue de chasse (21) est appliquée par pression sur la surface de la route avec une force d'appui uniforme telle qu'une charge de timon (F) donnée au véhicule de traction (15) ne peut pas être dépassée.

2. Dispositif selon la revendication 1, **caractérisé en ce que** deux bielles (19) sont conçues comme une grille et porte un essieu (19) avec deux roues de chasse(21).

3. Dispositif selon l'une des revendications 1 ou 2, **caractérisé en ce qu'**au moins une des roues de chasse (21) est pivotable avec un dispositif de levage entre une position de marche et une position de repos.

4. Remorque à essieu simple ou à essieu tandem avec un dispositif selon l'une des revendications 1 à 3.

5. Remorque à essieu simple ou à essieu tandem selon la revendication 4, **caractérisée en ce que** le ressort (25) est fixé de façon articulée au plancher du véhicule (35) vu dans le sens de la marche derrière l'endroit de fixation de la bielle (23) et devant la roue de chasse (21) au plancher du véhicule (35).

6. Remorque à essieu simple ou à essieu tandem selon l'une des revendications 4 ou 5, **caractérisée en ce qu'**est prévue dans le plancher du véhicule (35) une ouverture (37), qui permet l'engagement de la roue ou des roues de chasse (21) lorsque la bielle (23) bascule vers le haut.
